## Europäisches Patentamt

## European Patent Office

## Office européen des brevets

(11) Veröffentlichungsnummer: **0 186 062**
**A2**

## (12) EUROPÄISCHE PATENTANMELDUNG

(21) Anmeldenummer: **85115867.5**

(22) Anmeldetag: **12.12.85**

(51) Int. Cl.⁴: **H 01 B 7/12**

(30) Priorität: **22.12.84 DE 3447225**

(43) Veröffentlichungstag der Anmeldung:
**02.07.86 Patentblatt 86/27**

(84) Benannte Vertragsstaaten:
**CH DE FR GB IT LI**

(71) Anmelder: **Kabelwerke Reinshagen GmbH**
**Reinshagenstrasse 1**
**D-5600 Wuppertal 21(DE)**

(72) Erfinder: **Kotthaus, Hans Alfred, Ing.grad.**
**Grossenscheidt 5**
**D-5609 Hückeswagen(DE)**

(72) Erfinder: **Nöhring, Lothar, Dipl.-Ing.**
**Klausner Strasse 11**
**D-4044 Kaarst 2(DE)**

(74) Vertreter: **Priebisch, Rüdiger, Dipl.-Ing.,**
**Dipl.-Wirtsch.-Ing. (FH)**
**Kabelwerke Reinshagen GmbH Patentabteilung**
**Reinshagenstrasse 1**
**D-5600 Wuppertal 21(DE)**

(54) **Schwimmfähige, flexible elektrische und/oder optische Leitung.**

(57) Zur vereinfachten und materialsparenden Herstellung ist die Leitung (20) mit mindestens vier Luftkammern (28) versehen, die sich in Form eines einstückigen, extrudierten flexiblen Hohlkammerprofils (24) um die Adern (22) herum erstrecken. Die Dichte des Materials für das Hohlkammerprofil (24) liegt vorzugsweise unter 1 kg/dm³.

Fig. 3

EP 0 186 062 A2

## Schwimmfähige, flexible elektrische und/oder optische Leitung.

Die Erfindung betrifft eine schwimmfähige flexible Leitung nach dem Oberbegriff des Patentanspruches 1.

Schwimmfähige, flexible elektrische Leitungen werden schon seit langer Zeit in der Technik angewendet als bewegliche Stromzuführung zu Wasserbecken-Reinigungsanlagen, zu Schwimmbaggern und dergleichen. Neben der Methode, handelsübliche schwere Gummischlauchleitungen an Pontons oder ähnlichen Schwimmkörpern zu befestigen, sind auch Leitungen bekannt, die durch zentrale Korkzylinder oder durch zentrale oder umseilte Anordnung von mehreren Luftschläuchen schwimmfähig gemacht sind (DE- A 20 56 469). Durch die Verwendung von Korkzylindern wird die Leitung jedoch relativ steif, selbst wenn ,wie vorgeschlagen, nur kurze Korkzylinder vorgesehen und zwischen ihnen Gummischeiben angeordnet werden (DE- A 20 56 469). Der Herstellungsaufwand ist beträchtlich, nicht zuletzt durch die Verwendung von sehr verschiedenen Werkstoffen. Die Verwendung von ver- oder umseilten Luftschläuchen ist zwar eine brauchbare Lösung, jedoch ist der Herstellungsaufwand immer noch sehr hoch , und zwar sowohl vom verfahrenstechnischen Aufwand -Verwendung von Verseilmaschinen-,als auch vom materialmäßigen Einsatz.

0186062

Es ist auch bekannt, anstelle von Schläuchen geschäumte Kunststoffbänder mit geschlossenen Poren um ein flexibles Grundkabel zu wickeln oder längslaufende geschlitzte Kunststoffrohre vorzusehen und darüber einen geschlossenporigen, hohlzylindrischen geschäumten Außenmantel anzuordnen (DE-A 30 05 615). Auch dieser Aufbau bedarf aufwendiger Fertigungseinrichtungen und führt zu einer langsamen und somit unwirtschaftlichen Herstellung der Leitung.

Der Erfindung liegt die Aufgabe zugrunde, eine schwimmfähige, flexible elektrische und/oder optische Leitung der eingangs genannten Art zu schaffen, die schnell, mit einfachen Maschinen und materialsparend herzustellen ist.

Diese Aufgabe wird in vorteilhafter Weise durch die in Patentanspruch 1 gekennzeichnete Erfindung gelöst. Weiterbildungen und Abwandlungen der Erfindung sind in den Unteransprüchen aufgezeigt und in der Beschreibung näher erläutert.

Die innenliegende ummantelte elektrische bzw. optische Leitung bzw. die innenliegenden isolierten Adern können beliebigen Aufbaus sein, z.B. auch als Signal- und/oder als Energieadern ausgebildet. Günstig für den erforderlichen Auftrieb der Leitung und somit für ein geringes Volumen ist ein Isolier- bzw. Mantelwerkstoff, dessen Dichte möglichst niedrig ist. Für das Hohlkammerprofil wird vorzugsweise ein thermoplastischer Kunststoff eingesetzt, der als sogenanntes thermoplastisches Gummi (TPR) bekannt und auf üblichen Extrudern verarbeitbar ist. Möglich ist aber auch die Verwendung von Polyolefinen, wie z.B. Polyethylen oder Polypropylen. Schließlich sind auch andere Thermoplaste oder Elastomere verwendbar, z.B. Polyvinylchlorid, Polyurethan oder Polychloropren, deren Dichte gegebenenfalls durch kleinste Lufteinschlüsse beliebiger Art, z.B. erzeugt durch Blähmittel, verringert ist. Bei dem erstgenannten Kunststoff liegt die Dichte bei 0,91 kg/dm$^3$, so daß Blähmittel in der Regel nicht erforderlich sind.

Mit der Erfindung wird eine Leitungskonstruktion geschaffen, die sehr variabel dem speziellen Einsatzfall
anpaßbar ist. Dabei bleiben die Vorteile der einfachen
und schnellen und somit wirtschaftlichen Herstellung erhalten. Durch die Anordnung von mehreren völlig voneinander getrennten Luftkammern ist die Leitung sicher
gegen Absinken im Wasser und dergleichen, sehr flexibel,
mechanisch robust und langlebig im Gebrauch.

Die Erfindung wird anhand von Ausführungsbeispielen
näher erläutert.
Figur 1 zeigt eine erste einfache Ausgestaltung mit einer
         Vielzahl von Einzeladern innerhalb des Hohlkammerprofils.
Figur 2 zeigt eine zweite Ausführungsform mit vier einzelnen elektrischen Energieadern.
Figur 3 zeigt eine dritte Ausführungsform mit einer vieradrigen, ummantelten Energieleitung.
Figur 4 zeigt eine vierte Ausführungsform mit einer beliebigen elektrischen und/oder optischen Leitung.
Figur 5 zeigt eine vieradrige Flachleitung, bei der die
         Erfindung verwirklicht ist.

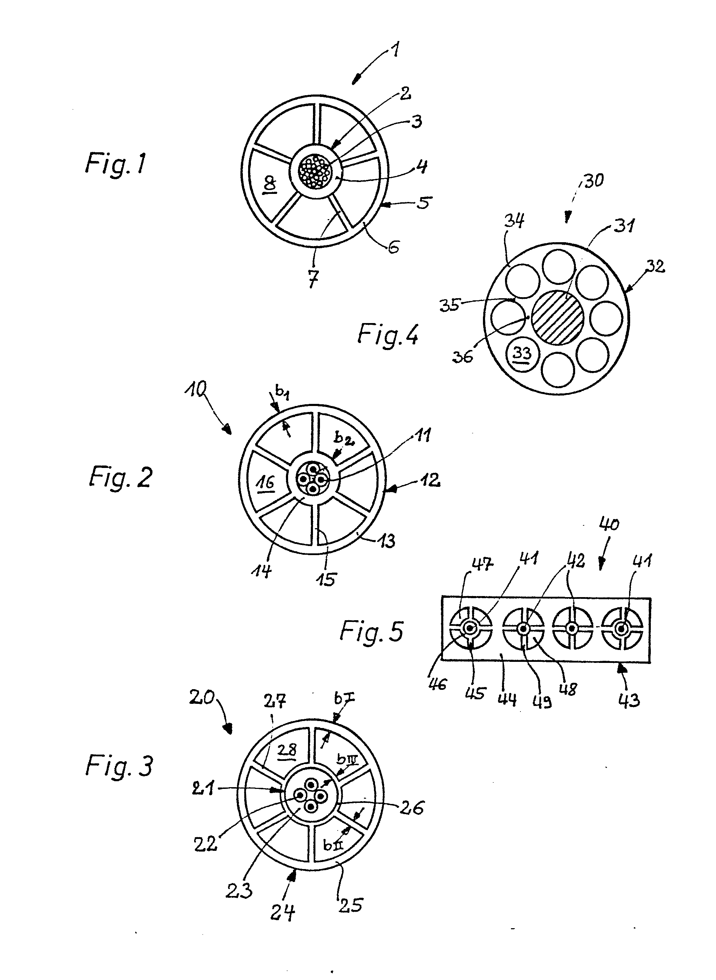

Figur 1 zeigt eine schwimmfähige Leitung 1 mit einer
zentral angeordneten Leitung 2 mit einer Vielzahl von
Adern 3, die von einem isolierenden Mantel 4 umgeben sind.
Die Adern 3 können z.B. zur Übertragung von Signalen dienen
und elektrischer oder /und optischer Art sein. Auf den Mantel 4 ist ein kreisringförmiges flexibles Hohlkammerprofil 5 aus thermoplastischem Material unter radialem Druck
aufextrudiert. Das Hohlkammerprofil 5 umfaßt einen Außenmantel 6, von dem sich radial nach innen zu fünf Rippen 7
erstrecken, die auf dem Mantel aufliegen. Durch entsprechende Wahl des radialen Extrusionsdrucks liegen die Rippen 7 luft- und flüssigkeitsdicht auf und bilden zusammen
mit den Mantel 4 fünf Luftkammern 8, die sich im wesentlichen in Längsrichtung der Leitung[1] erstrecken.

Figur 2 zeigt eine schwimmfähige Leitung 10 mit vier verseilten elektrisch isolierten Adern 11 für 220 oder 380
Volt Spannung, die im Inneren eines kreisringförmigen Hohlkammerprofils 12 angeordnet sind. Das Hohlkammerprofil 12
besteht aus dem Außenmantel 13 und dem Innenmantel 14, die über
sechs Stege 15 miteinander verbunden sind, so daß sich sechs
Luftkammern 16 ergeben. Das Hohlkammerprofil 12 ist als
Schlauch lose über die Adern 11 extrudiert; die Adern 11
sind also innerhalb des Innenmantels 14 beweglich gelagert.
Die Wandstärke $b_1$ des Außenmantels 13 ist kleiner als die
Wandstärke $b_2$ des Innenmantels 14, da letztere hier die
volle Isolier- und Schutzfunktion für die Adern 11 übernimmt.

Figur 3 zeigt eine schwimmfähige Leitung 20, mit einer gebräuchlichen Geräteanschlußleitung 21 aus vier isolierten
Adern 22, die von einem extrudierten Mantel 23, z.B. aus
Polyvinylchlorid oder Gummi, umgeben sind. Das kreisringförmige Hohlkammerprofil 24 besteht aus dem Außenmantel 25
und dem Innenmantel 26, die über sechs Stege 27 miteinander
verbunden sind, so daß sich sechs Luftkammern 28 ergeben.
Das Hohlkammerprofil 24 wurde unter radialem Druck auf die
Leitung 21 aufextrudiert. Die Wandstärke $b_I$ des Außenmantels 25 ist größer als die Wandstärke $b_{II}$ der Stege 27,
diese ist wiederum größer als die Wandstärke $b_{III}$ des Innenmantels 26: Das sich ergebende Verhältnis $b_I > b_{II} > b_{III}$ hat
sich als besonders vorteilhaft erwiesen. Der Innenmantel 26
kann hier sehr dünn gewählt werden, da die Isolier- und
Schutzfunktion voll vom Mantel 23 übernommen ist.

Figur 4 zeigt eine schwimmfähige flexible Leitung 30 mit
einer zentralen mehradrigen Leitung 31, die beliebiger Art
sein kann, z.B. wie schon zu der Figuren 1 bis 3 beschrieben. Um die Leitung 31 ist ein kreisringförmiges Hohlkammerprofil 32 extrudiert, das acht im Querschnitt runde Luftkammern 33 aufweist, wobei der Außenmantel 34 über acht
Stege 35 mit dem Innenmantel 36 verbunden ist. Die runde

REINSHAGE

0186062

Form der Luftkammern 33 erlaubt eine vereinfachte Herstellung des Spritzkopfes des Extruders und erzielt eine gute Polsterung der Leitung 30, was besonders bei großer Druckbeabspruchung wichtig sein kann.

Figur 5 zeigt eine schwimmfähige flexible Leitung in Form einer Flachleitung 40. Die Flachleitung 40 umfaßt zwei außenliegende und zwei innenliegende isolierte Adern 41 bzw. 42. Die außenliegenden Adern 41 sind voll vom Material des Mantels 43 umgeben, da der äußere Teil 44 des Mantels 43 über Stege 45 mit einem kreisringförmigen inneren Teil 46 verbunden ist. Äußerer und innerer Mantelteil 44 bzw. 46 bilden zusammen mit den Stegen 45 vier längslaufende kreisringsektor-förmige Luftkammern 47. Bei den innenliegenden Adern 42 werden die vier längslaufenden Luftkammern 48 von dem äußeren Mantelteil 44, den Stegen 49 und der Ader 42 begrenzt. Neben dem gezeigten kreisförmigen Umriß der vier Luftkammern 47 und 48 sind auch Formen möglich, die der Form des Flachkabels 40 besser angepaßt sind, z.B. mit rechteckigem oder quadratischem Umriß.

Patentansprüche

1. Schwimmfähige flexible Leitung (1,10,20,30,4C) mit
   mehreren isolierten elektrischen und/oder optischen
   Adern (3,11,22,31,41,42), mit konzentrisch um die
   Adern (3,11,22,31,41,42) angeordneten wendelförmig
   oder längs verlaufenden Luftkammern (8,16,28,33,47,48)
   und mit einem Außenmantel (6,13,25,34,44),
   dadurch gekennzeichnet, daß mindestens vier Luftkammern ( 8,16,28,33,47,48) von einem einstückig
   extrudierten flexiblen Hohlkammerprofil (5,12,24,32,43)
   gebildet sind.

2. Leitung nach Patentanspruch 1, dadurch gekennzeichnet,
   daß im Zentrum des runden Hohlkammerprofils (5) eine mehradrige ummantelte Leitung (2) angeordnet ist, auf dessen
   Mantel (4) sich das Hohlkammerprofil (5) über mindestens
   vier radiale Rippen (7) abstützt.

3. Leitung nach Patentanspruch 2, dadurch gekennzeichnet,
   daß die Rippen (7) luft- und wasserdicht mit dem Mantel
   (4) verbunden sind.

4. Leitung nach Patentanspruch 1, dadurch gekennzeichnet,
   daß das Hohlkammerprofil ( 12,24,32) durch Bildung einer
   inneren (14,26,36) und einer äußeren Wand ( 13,25,34)
   im Querschnitt kreisringförmig ausgebildet ist.

5. Leitung nach Patentanspruch 2,3 oder 4, dadurch gekennzeichnet,
   daß die Luftkammern (8,16,28,47,48) im Querschnitt
   kreisringsektorförmig ausgebildet sind.

6. Leitung nach einem der Patentansprüche 1 bis 5, dadurch
   gekennzeichnet, daß das Material des Hohlkammerprofils
   (4,12,24,32,43) eine Dichte unterhalb 1kg/dm$^3$ hat,
   vorzugsweise eine Dichte von 0,9 $\pm$ 0,02 kg/dm$^3$.

7. Leitung nach einem der Patentansprüche 4 bis 6, dadurch gekennzeichnet, daß unterhalb der inneren Wand (14) die Adern (11) ohne zusätzlichen Mantel angeordnet sind und die Wandstärke ($b_2$) der Innenwand (14) größer ist als die Wandstärke ($b_1$) der Außenwand (13).

8. Leitung nach einem der Patentansprüche 4 bis 6, dadurch gekennzeichnet, daß unterhalb der inneren Wand (26) die Adern (22) mit einem zusätzlichen Mantel (23) versehen sind und die Wandstärke ($b_{III}$) der Innenwand (26) kleiner ist als die Wandstärke ($b_I$) der Außenwand (25).

9. Leitung nach Patentanspruch 8, gekennzeichnet durch folgendes Verhältnis:

Außenwandstärke ($b_I$) $>$ Stegwandstärke ($b_{II}$) $>$ Innenwandstärke ($b_{III}$).

10. Leitung nach einem der Patentansprüche 1 bis 9, dadurch gekennzeichnet, daß sie als Flachleitung (40) mit mehreren nebeneinander angeordneten Gruppen von Luftkammern (47,48) ausgebildet ist und jede einzelne Gruppe die Form eines Hohlkammerprofils aufweist.

11. Verfahren zur Herstellung einer Leitung nach einem der Patentansprüche 1 bis 10, dadurch gekennzeichnet, daß das Hohlkammerprofil auf die Adern bzw. die mehradrige Leitung unter radialem Druck aufextrudiert wird.

12. Verfahren zur Herstellung einer Leitung nach einem der Patentansprüche 4 bis 10, dadurch gekennzeichnet, daß das Hohlkammerprofil als Schlauch mit Abstand über die darin angeordnete(n) Adern bzw. Leitung extrudiert wird.

Fig.1

Fig.4

Fig.2

Fig.5

Fig.3